# FASCICULE DE BREVET EUROPEEN

(11) **EP 2 926 028 B1**
(45) Date de publication et mention de la délivrance du brevet: **14.12.2016**
(21) Numéro de dépôt: 13808129.4
(22) Date de dépôt: 29.11.2013
(51) Int. Cl.: F16H 57/039, B65D 51/00, B62D 5/04, F16H 55/24, F16H 57/029

(54) **OBTURATEUR CLIPPABLE AVEC JUPE DÉFLECTRICE POUR CARTER DE DIRECTION**
KLEMMBARER VERSCHLUSS MIT EINER DEFLEKTORSCHÜRZE FÜR EIN LENKUNGSGEHÄUSE
CLIPPABLE SHUTTER WITH A DEFLECTOR SKIRT FOR A STEERING HOUSING

(30) Priorité: 03.12.2012 FR 1261552; 30.08.2013 FR 1358317
(43) Date de publication de la demande: 07.10.2015
(73) Titulaire: JTEKT Europe, 69450 Irigy (FR)
(72) Inventeur: MONNET, Roch, 69126 Brindas (FR); GEX, Caroline, 89100 Sens (FR)
(74) Mandataire: Chevalier, Renaud Philippe
(86) Numéro de dépôt international: PCT/FR2013/052898
(87) Numéro de publication internationale: WO 2014/087079

(56) Documents cités:
- DE-A1-102006 024 767
- DE-A1-102010 050 561
- GB-A- 187 338
- US-A- 5 352 853
- US-A1- 2009 313 910

## Description

La présente invention concerne le domaine général des systèmes de direction de véhicules, notamment de direction assistée pour véhicules automobiles, et plus particulièrement les carters utilisés pour loger les mécanismes de direction.

Il est connu de recouvrir tout ou partie d'un mécanisme de direction, et notamment les éléments de transmission à engrenage d'un tel mécanisme, par un carter rigide qui assure le guidage, la protection et/ou le maintien dans un lubrifiant dudit mécanisme.

Pour permettre la mise en place ou l'entretien du mécanisme, et par exemple la vidange ou le remplissage en lubrifiant, le carter est pourvu d'un ou plusieurs orifices d'accès, qui doivent bien entendu être obturés, en fonctionnement normal, pour garantir l'étanchéité du carter.

A cet effet, on utilise généralement des bouchons filetés destinés à être vissés dans des extrémités taraudées des orifices d'accès, ou bien encore des capots pourvus d'une pluralité de pattes de fixation périphériques que l'on vient brider par des vis sur le carter, afin de masquer les orifices concernés.

Dans l'un et l'autre cas, l'étanchéité est généralement assurée par un joint, du genre joint torique, que le bouchon ou le capot vient comprimer contre le rebord de l'orifice.

Or, si cette forme d'obturation donne généralement satisfaction d'un point de vue fonctionnel, elle peut toutefois présenter certains inconvénients.

En effet, la multiplication des pièces nécessaires à l'obturation (bouchon de forme complexe, joint, vis...) tend à compliquer l'assemblage du carter, et à augmenter son coût de fabrication, ainsi que son poids et son encombrement.

En outre, il est généralement difficile de contrôler, notamment visuellement, la bonne mise en place des éléments d'obturation, et en particulier le positionnement du joint, si bien que des défauts d'étanchéité peuvent parfois apparaître ou subsister sans être détectés immédiatement, ce qui peut être préjudiciable au bon fonctionnement et à la longévité du système de direction.

Le document DE 10 2006 024 767 A décrit un dispositif selon le préambule de la revendication 1.

Les objets assignés à l'invention visent par conséquent à remédier aux inconvénients susmentionnés et à proposer un nouveau système d'obturation de carter, compact et léger, qui assure une étanchéité fiable et efficace, tout en étant simple, rapide et peu coûteux à mettre en oeuvre.

Les objets assignés à l'invention sont atteints au moyen d'un dispositif de protection d'un mécanisme selon la revendication 1.

Avantageusement l'utilisation d'un bouchon clippable conforme à l'invention, qui forme une pièce simple, peu coûteuse à fabriquer, légère et compacte, permet d'obturer très simplement et rapidement le ou les orifices d'accès du carter, par simple enfoncement et emboîtement dudit bouchon sous contrainte élastique.

De façon particulièrement avantageuse, l'étanchéité de l'obturation est automatiquement réalisée lors de l'insertion du bouchon dans l'alésage, du fait que la garniture d'étanchéité, portée par le moyeu, vient directement se centrer et se positionner convenablement au contact dudit alésage.

En outre, cette étanchéité principale, assurée par la garniture d'étanchéité qui épouse le moyeu et l'alésage entre lesquels ladite garniture s'interpose, et entre lesquels ladite garniture est de préférence comprimée élastiquement, est avantageusement renforcée par la présence du déflecteur (ou « brise-jet »), qui forme un organe d'étanchéité secondaire de type chicane, et qui protège ainsi efficacement la zone de contact entre l'alésage de l'orifice et le moyeu (et plus particulièrement entre la paroi de l'alésage et la garniture d'étanchéité dudit moyeu) de toute exposition directe à la poussière, aux divers corps étrangers salissants ou abrasifs, ou aux projections d'eau.

En recouvrant la zone de jonction annulaire comprise entre le moyeu et l'alésage et occupée par la garniture d'étanchéité, le déflecteur est notamment à même de dévier un jet d'eau utilisé par un nettoyeur haute pression, et ainsi d'éviter qu'un tel jet d'eau ne se force un passage entre le bouchon et l'alésage du carter en provoquant un décollement interstitiel de la garniture d'étanchéité, et donc une rupture de l'étanchéité de l'obturation, ainsi qu'une pénétration d'eau dans la chambre, pénétration d'eau qui serait susceptible de provoquer le grippage et/ou la corrosion du mécanisme.

On notera que l'invention utilise avantageusement un même organe, à savoir la collerette, pour former à la fois un organe élastique de fixation d'une part, capable de coopérer par encliquetage avec le carter pour assurer le maintien du bouchon en position dans ledit carter, et un organe de renfort d'étanchéité, de type déflecteur, d'autre part.

L'agencement propre à l'invention permet ainsi d'assurer simultanément plusieurs fonctions, en l'espèce de fixation et d'étanchéité, au moyen d'une seule et même pièce formant un bouchon léger et facile à manipuler, ce qui permet d'optimiser l'efficacité et le coût de l'obturation.

Enfin, la fixation par encliquetage du bouchon, par une collerette qui reste visible depuis l'extérieur du carter, non seulement permet d'assurer une tenue mécanique robuste du bouchon, et notamment d'éviter tout arrachement de ce dernier, mais en outre facilite le contrôle visuel de l'assemblage, en permettant à l'opérateur de vérifier immédiatement, d'un simple regard, le bon enclenchement de la collerette dans la gorge d'arrêt, ainsi que l'état du bouchon (et notamment l'absence de fissure dans le moyeu), et ce aussi bien à l'occasion du premier montage que lors de visites ultérieures d'entretien périodique du véhicule.

D'autres objets, caractéristiques et avantages de l'invention apparaîtront plus en détail à la lecture de la description qui suit, ainsi qu'à l'aide des dessins annexés, fournis à titre purement illustratif et non limitatif, parmi lesquels :
La figure 1 illustre, selon une vue en perspective éclatée, un exemple de réalisation de dispositif de protection conforme à l'invention.
La figure 2 illustre, selon une vue de détail en coupe longitudinale, l'agencement de l'orifice d'accès d'un élément de carter conforme à l'invention.
Les figures 3 et 4 illustrent, selon des vues de détail en demi-coupe longitudinale, des variantes de bouchons, respectivement à collerette tronconique pleine monolithique et à collerette tronconique fendue, mis en place au sein d'un élément de carter présentant un orifice d'accès du type représenté sur la figure 2.
Les figures 5 et 6 illustrent, selon des vues en perspective, les bouchons des figures 3 et 4 respectivement, le premier bouchon possédant une collerette tronconique pleine, et le second bouchon une collerette tronconique fendue, subdivisée en une pluralité de languettes d'encliquetage.
Les figures 7, 8, et 9 illustrent, selon des vues de détail en demi-coupe longitudinale, différents agencements possibles de garnitures d'étanchéité portées par des bouchons conformes à l'invention, obturant un orifice d'accès selon la figure 2.
La figure 10 illustre, selon une vue en perspective, une variante de réalisation de bouchon conforme à l'invention, à collerette droite.
La figure 11 illustre, selon une vue en coupe longitudinale, le bouchon de la figure 10 obturant un carter de réducteur à roue tangente et vis sans fin.

L'invention concerne un dispositif 1 de protection d'un mécanisme 2, tel qu'un mécanisme 2 de direction de véhicule, et plus particulièrement un mécanisme 2 de direction assistée.

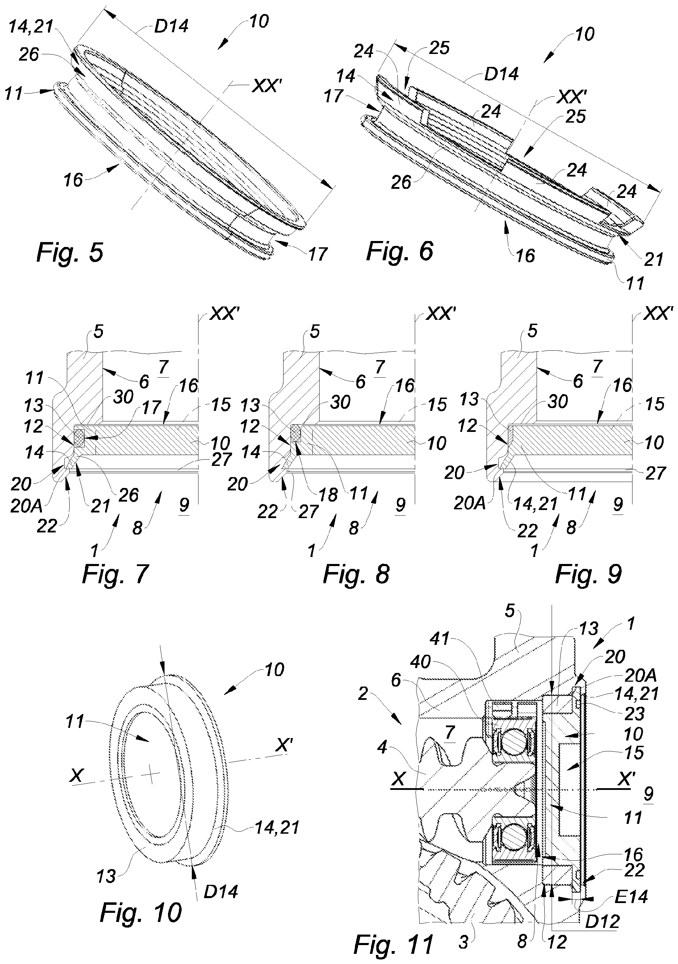

Ledit mécanisme 2 peut notamment former un réducteur, tel qu'un réducteur à engrenage, comportant par exemple une roue tangente 3 entraînée par une vis sans fin 4, elle-même soutenue par exemple par un roulement à billes 40 suspendu radialement par un ressort à lame 41 (figure 11), ou bien encore tout autre mécanisme de conversion de mouvement, et notamment tout mécanisme de manoeuvre d'une direction de véhicule, comportant par exemple un pignon, entraîné par un volant de conduite et/ou un moteur d'assistance, qui engrène sur une crémaillère de direction montée coulissante dans un carter de direction et destinée à être reliée, *via* des biellettes de direction, à des roues directrices, afin de pouvoir modifier l'angle de braquage desdites roues directrices.

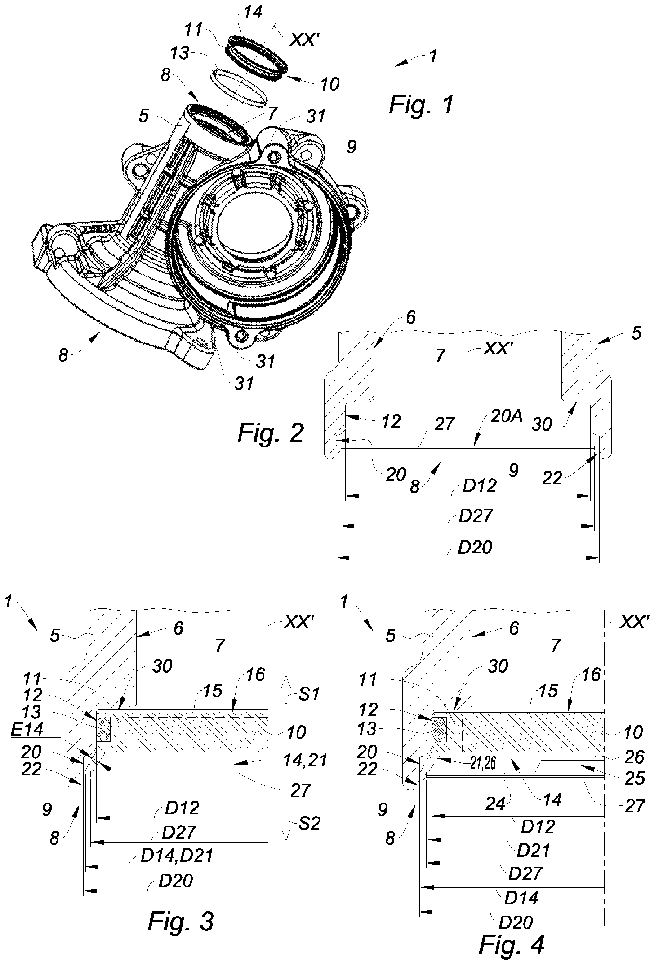

De façon particulièrement préférentielle, ledit dispositif 1 forme ainsi un carter de direction, ou un sous-ensemble de carter de direction, tel qu'un élément de carter illustré sur la figure 1 et conçu pour abriter une liaison pignon/crémaillère de direction.

Selon l'invention, le dispositif 1 comprend d'une part un élément de carter 5 formant une paroi 6 délimitant une chambre 7 qui est destinée à recevoir et abriter le mécanisme 2, ladite paroi 6 étant percée d'au moins un orifice d'accès 8 permettant d'accéder à la chambre 7 depuis l'extérieur 9 dudit élément de carter 5, et d'autre part un bouchon 10 qui obture ledit orifice d'accès 8.

Le bouchon 10 a notamment pour fonction d'obturer l'orifice d'accès 8 de manière étanche, afin d'éviter d'une part toute fuite vers l'extérieur 9 du lubrifiant (graisse ou huile) qui est utilisé dans la chambre 7 pour lubrifier le mécanisme, et d'autre part toute intrusion dans la chambre 7 d'eau, de brouillard salin, de poussière ou de particules diverses en provenance de l'extérieur 9 du carter.

De façon particulièrement préférentielle, l'orifice d'accès 8 permettra l'introduction et le montage, à l'intérieur du carter 5, de tout ou partie du mécanisme 2, et par exemple de la vis sans fin 4 et/ou du roulement à billes 40 susmentionnés.

Bien entendu, un même élément de carter 5 pourra comporter plusieurs orifices d'accès 8 conduisant à une même chambre 7, et obturés chacun, le cas échéant, par un bouchon 10 selon l'invention, dont le diamètre correspondra au cas par cas à celui de l'orifice 8 concerné.

En particulier, tel que cela est illustré sur la figure 1, la chambre 7 pourra former une chambre cylindrique traversante, de type chemise rectiligne, présentant à l'une de ses extrémités (supérieure sur la figure 1) un premier orifice 8, ici de petit diamètre, et à son autre extrémité opposée (inférieure sur la figure 1) un second orifice 8, ici de plus grand diamètre, chacun desdits orifices 8 étant obturé par un bouchon 10 de taille approprié (les bouchons étant ainsi montés en opposition l'un de l'autre).

Selon l'invention, le bouchon 10 présente une structure étagée axialement, qui comprend successivement, selon l'axe directeur (XX') dudit bouchon, un moyeu 11, qui est engagé dans un alésage 12 de l'orifice d'accès 8, ledit moyeu 10 étant orienté vers la chambre 7 et portant une garniture d'étanchéité 13 qui coopère avec ledit alésage 12 de l'orifice d'accès, puis une collerette 14, qui est orientée vers l'extérieur 9 de l'élément de carter 5 et dont le diamètre hors-tout D14 est supérieur au diamètre D12 de l'alésage 12.

De préférence, le moyeu 11 du bouchon 10 présente sensiblement une forme de révolution autour de son axe directeur (XX).

On considérera par ailleurs que l'axe directeur (XX') du bouchon coïncide avec l'axe générateur de l'alésage 12, centré sur ledit alésage 12 et plus globalement sur l'orifice d'accès 8, lorsque ledit bouchon 10 est convenablement engagé dans ledit orifice d'accès 8.

Par convention, on désignera par « axiales » ou « longitudinales » les dimensions et directions orientées selon (ou parallèlement à) l'axe directeur (XX'), et par « radiales », les dimensions et directions orientées transversalement (et plus particulièrement perpendiculairement) audit axe directeur (XX').

De préférence la paroi latérale (pleine) du moyeu 11 présente une forme, préférentiellement cylindrique de base circulaire, et/ou des dimensions, qui sont sensiblement conjuguées, au jeu d'insertion et de guidage près, à celles de l'alésage 12.

Le moyeu 10 se présentera de préférence sous la forme d'un cylindre monolithique, qui pourra être plein, ou bien encore creusé, notamment côté extérieur 9, par un lamage 15 (représenté en pointillé sur les figures 3, 4 et 7 à 9), ce qui permettra avantageusement d'alléger le bouchon 10 et d'en améliorer l'élasticité fonctionnelle (pour faciliter son encliquetage).

La garniture d'étanchéité 13 pourra avantageusement former un joint racleur annulaire, qui habille (entoure) complètement le moyeu 11, sur tout son périmètre, à 360 degrés autour de son axe directeur (XX'), afin de combler l'interstice d'engagement qui correspond au jeu radial d'insertion prévu entre la paroi dudit moyeu 11 et celle de l'alésage12.

Selon une variante de réalisation préférentielle, la garniture d'étanchéité 13 est formée par un revêtement en matériau élastomère, de préférence surmoulé, qui recouvre le moyeu 10, tel que cela est représenté sur la figure 9.

Avantageusement, l'utilisation d'une telle garniture d'étanchéité 13 faisant partie intégrante du bouchon 10, par fabrication, simplifiera la manipulation du bouchon 10, et permettra donc un montage simplifié, rapide et reproductible dudit bouchon 10 sur l'élément de carter 5.

La garniture d'étanchéité 13 pourra notamment prendre la forme d'une bande périphérique recouvrant la paroi latérale bombée du moyeu 11, tel que cela est illustré sur la figure 9, et/ou d'une rondelle plate, pleine ou évidée en son centre, couvrant en partie ou en totalité le nez 16 du bouchon, c'est-à-dire qui couvre tout ou partie (et notamment le rebord) du disque qui forme la paroi terminale 16 (nez) dudit bouchon 10, paroi terminale 16 qui est de préférence normale à l'axe directeur (XX').

Selon une autre variante de réalisation la garniture d'étanchéité 13 pourra être formée par un joint torique rapporté sur le moyeu 11.

Ledit joint torique, initialement distinct du moyeu, sera avantageusement rapporté de manière réversible sur le moyeu 11, de sorte à rester interchangeable.

Ledit joint torique peut alors être logé dans une gorge annulaire 17 creusée dans la paroi latérale du moyeu 11 (figures 3 à 7), ce qui assure un excellent maintien dudit joint après son pré-assemblage sur le bouchon 10, et facilite donc la mise en place dudit bouchon 10, ainsi pré-équipé de sa garniture d'étanchéité 13, dans l'orifice 8.

Alternativement, ledit joint torique pourra être logé contre un épaulement 18 du moyeu 11, qui s'ouvre à l'opposé de la collerette 14 (figure 8), un tel adossement simultané contre l'élément de carter 5 et le moyeu 11 permettant avantageusement, le cas échéant, d'assurer une excellente étanchéité tant radiale qu'axiale, par pincement bidirectionnel (croisé) du joint torique.

Quelle que soit sa forme, la garniture d'étanchéité 13 pourra être réalisée dans tout matériau élastomère, et plus particulièrement dans tout matériau élastomère thermoplastique, approprié, tel qu'un polyuréthane thermoplastique (TPU).

De préférence, la garniture d'étanchéité 13 sera réalisée dans un matériau distinct du matériau constitutif du moyeu 11, et de préférence distinct du matériau constitutif de la collerette 14, et plus particulièrement dans un matériau élastomère plus souple (de dureté Shore moins élevée) que le matériau constitutif du moyeu 11, respectivement de la collerette 14.

Cette différenciation permettra de combiner un moyeu 11 robuste, formant un support relativement rigide et stable, avec une garniture d'étanchéité 13 très élastique apte à épouser efficacement, de manière étanche, le contour de l'alésage 12, en compensant au besoin les aspérités et irrégularités de ce dernier.

Selon l'invention, tel que cela est notamment visible sur les figures 3 et 4, la collerette 14 est d'une part engagée en appui dans une gorge d'arrêt 20 creusée dans l'élément de carter 5 en déport radial (centrifuge) de l'alésage 12, de telle manière que ladite collerette 14 s'oppose par encliquetage à l'extraction du bouchon 10 hors de l'orifice d'accès 8 (au moins dans le sens axial opposé au sens d'insertion du bouchon), et ladite collerette 14 présente d'autre part une portion pleine qui s'étend radialement à partir du moyeu 11 pour former un déflecteur 21 dont le diamètre D21 est supérieur à celui D12 de l'alésage 12, de telle manière que le déflecteur 21 couvre le pourtour dudit alésage 12 en définissant une chicane radiale qui protège le moyeu 11 et la garniture d'étanchéité 13.

Avantageusement, le déflecteur 21 forme un bouclier en excroissance radiale centrifuge du moyeu 11, qui surplombe et recouvre ainsi, de préférence sur tout le périmètre de l'alésage 12, sans interruption à 360 degrés autour du moyeu, l'espace interstitiel délimité par la paroi latérale externe (convexe) du moyeu 11 d'une part et la paroi latérale interne (concave) de l'alésage 12 d'autre part, de sorte à protéger cet espace interstitiel, et par conséquent la garniture d'étanchéité 13 qui s'y trouve, des projections directes d'eau ou de particules solides.

L'étanchéité de l'obturation procurée par le bouchon 10 s'en trouve ainsi renforcée.

Le déflecteur 21, qui forme un rebord, de préférence annulaire, en saillie radiale centrifuge du moyeu 11 sur tout le périmètre dudit moyeu, se confond avantageusement avec tout (figures 3 et 5) ou partie (figures 4 et 6) de la collerette 14.

Le déflecteur 21, et plus globalement la collerette 14, sera de préférence venu(e) de matière avec le moyeu 11.

A ce titre, selon une variante de réalisation préférentielle, le moyeu 11 et la collerette 14 du bouchon 10 sont formés d'un seul tenant dans un matériau polymère, de préférence en polyamide (par exemple du type PA66) ou en polyacétal (par exemple du type PolyOxyMéthylène), éventuellement renforcé de fibres.

L'ensemble moyeu 11/collerette14 peut ainsi former une âme 11, 14 en plastique dur, rigide ou semi-rigide, sur laquelle sera ensuite rapportée, et le cas échéant surmoulée, la garniture d'étanchéité 13.

Une telle âme, particulièrement légère et bon marché, sera facile à produire en série par moulage par injection.

Avantageusement, l'invention permet d'utiliser une même partie du bouchon 10, en l'occurrence la collerette 14, pour assurer à la fois la fixation dudit bouchon 10 par emboîtement élastique dans le carter, et un renforcement d'étanchéité par chicane.

Bien entendu, quel qu'en soit du reste le matériau constitutif, la forme et les dimensions de la collerette 14 seront adaptées à ses fonctions.

En particulier, l'agencement de la collerette 14 lui conférera à la fois une flexibilité intrinsèque et une rigidité toutes deux suffisantes pour lui permettre de remplir son rôle de clip de fixation, c'est-à-dire pour lui permettre de s'escamoter, et plus particulièrement de se contracter, pour franchir l'embouchure 22 de l'orifice 8 et venir s'insérer, et plus particulièrement se redéployer (radialement) dans la gorge d'arrêt 20 une fois ladite embouchure 22 franchie.

Une fois en place dans la gorge d'arrêt 20, la collerette 14, et plus particulièrement la couronne marquant le rebord extrémal libre de ladite collerette, assurera le maintien mécanique du bouchon 10 par blocage axial anti-retour.

Plus particulièrement, l'extrémité libre de la collerette 14 viendra en appui contre une paroi dite « rebord d'arrêt » 20A de la gorge d'arrêt 20, rebord d'arrêt 20A qui forme une butée axiale de type épaulement (en saillie radiale centripète par rapport au fond de ladite gorge d'arrêt 20), ladite butée axiale s'opposant ainsi au déplacement (recul) axial de ladite collerette 14, et donc plus globalement du bouchon 10, dans le sens de l'extraction (c'est-à-dire dans le sens de l'éloignement de la chambre 7).

Le moyeu 11, et plus particulièrement sa paroi latérale, pourra donc être dépourvu(e) d'éléments de fixation, et notamment dépourvu(e) de filet, et ainsi présenter un aspect lisse, ce qui simplifiera encore la fabrication, notamment par moulage, du bouchon 10.

Avantageusement, l'utilisation d'une fixation par encliquetage faisant intervenir une gorge d'arrêt 20 et une collerette 14 qui restent bien visibles depuis l'extérieur 9 après montage permet un contrôle visuel rapide et fiable de la position du bouchon 10 par rapport au carter 5, et donc de l'étanchéité et de la tenue de l'assemblage, ce qui permet au besoin de détecter et de corriger immédiatement une éventuelle anomalie.

En outre, l'enfoncement complet du bouchon 10 dans l'orifice d'accès 8, et l'emboîtement de la collerette 14 dans une gorge d'arrêt 20 ménagée dans le carter 5 lui-même, permet de dissimuler entièrement le bouchon 10 dans ledit carter 5, et plus particulièrement de placer la collerette 14 en retrait (axial) de la surface apparente du carter 5, et ainsi d'empêcher tout arrachement ou extraction intempestive du bouchon 10 par un obstacle ou un outil qui viendrait frotter accidentellement ladite surface apparente du carter 5.

Plus particulièrement, un tel agencement, qui utilise le carter 5 pour protéger l'accès au bouchon 10, offre un montage dudit bouchon 10 qui est particulièrement sûr, car non spontanément réversible, voire irréversible (le démontage nécessitant en effet une intervention volontaire d'un mécanicien à l'intérieur de l'orifice d'accès 8 et provoquant l'endommagement ou la destruction du bouchon 10).

Selon une variante de réalisation possible de l'invention, illustrée sur la figure 11, la collerette 14 peut se présenter sous la forme d'un disque, de préférence d'épaisseur constante, qui s'étend de façon droite, c'est-à-dire de façon sensiblement normale à l'axe directeur (XX').

Une rainure d'affaiblissement 23 circulaire, concentrique au rebord de la collerette 14, peut alors avantageusement améliorer la flexibilité de ladite collerette 14, à la manière d'une charnière.

A titre d'exemple, en pareil cas, l'épaisseur brute E14 de la collerette 14 pourra être comprise entre 1 mm et 2 mm, et la profondeur (axiale) de la rainure d'affaiblissement 23 pourra être comprise entre 0,5 mm et 1,5 mm.

Toutefois, de façon particulièrement préférentielle, et tel que cela est illustré sur les figures 3 à 9, la collerette 14 est inclinée par rapport à l'axe directeur (XX') du bouchon 10 pour former une jupe tronconique dont le sommet est orienté vers la chambre 7.

Avantageusement, une telle configuration de la collerette, qui forme alors une sorte de pointe d'enfoncement flexible, facilite l'insertion et la mise en place du bouchon 10 dans l'élément de carter 5, d'une part en améliorant sa capacité de flexion (en contraction puis en redéploiement) lors de l'encliquetage, dans le sens "passant" S1 d'enfoncement du tronc de cône, d'autre part en renforçant la tenue mécanique du bouchon à l'arrachement, par la fourniture d'une assise solide, dans le sens "bloquant" S2, et enfin en procurant un effet d'auto-centrage lors de l'enfoncement du bouchon 10, effet d'auto-centrage qui permet notamment d'éviter d'endommager la garniture d'étanchéité 13 par écrasement, cisaillement ou abrasion.

De préférence, quelle que soit son orientation (droite ou inclinée), la collerette 14 présentera une épaisseur E14 sensiblement constante, qui pourra par exemple être comprise entre 1 mm et 2 mm (notamment pour des diamètres de moyeu 11 et/ou des diamètres de collerette D14 typiques de l'ordre de 30 mm à 120 mm).

Selon une variante de mise en oeuvre, la collerette 14 est fendue, depuis son extrémité libre jusqu'à la plus petite limite radiale externe du déflecteur 21, de manière à être subdivisée en une pluralité de languettes d'encliquetage 24, tel que cela est notamment visible sur les figures 4 et 6.

Cette découpe en créneaux de la couronne de la collerette 14 permet avantageusement d'améliorer la flexibilité des languettes 24 restantes (de préférence équiréparties sur la circonférence de la collerette 14), qui deviennent ainsi indépendantes les unes des autres en flexion, afin de faciliter l'encliquetage, sans pour autant sacrifier l'étanchéité, puisque la portion annulaire qui forme la racine 26 de la collerette 14, c'est-à-dire la base de ladite collerette 14 par laquelle cette dernière est rattachée au moyeu 11, est conservée et tient lieu de déflecteur 21.

Dans cette configuration, la plus petite limite radiale du déflecteur (notée D21 sur la figure 4) correspond alors au diamètre du fond des fentes 25 qui séparent les languettes 24, c'est-à-dire au diamètre hors-tout de la racine 26 qui amorce la collerette 14. Ce diamètre D21 de ladite racine 26 demeure néanmoins supérieur (strictement) à celui D12 de l'alésage 12, ce qui évite avantageusement une interruption de la couverture protectrice.

Quel que soit l'agencement de la collerette 14, continue ou crénelée (fendue), celle-ci comprendra donc avantageusement toujours un déflecteur 21, de type soucoupe, formant, à l'aplomb axial de l'alésage 8, un brise-jet apte à résister notamment aux nettoyeurs à eau « haute pression ».

De préférence, l'orifice d'accès 8 présente une embouchure 22 tronconique qui surplombe la gorge d'arrêt 20 et dont le sommet est orienté vers la chambre 7, la petite base 27 (ou « col ») de ladite embouchure 22 présentant un diamètre D27 qui est supérieur (strictement) au diamètre D12 de l'alésage 12 et inférieur (strictement) au diamètre hors-tout D14 de la collerette 14, ainsi qu'au diamètre de fond D20 de la gorge d'arrêt 20, tel que cela est notamment visible sur les figures 3 et 4.

En l'espèce, on a, tel que cela est notamment visible sur les figures 2 à 4 : D12 < D27 < D20, avec de surcroît D12 < D21 ≤ D14, et D27 < D14 (et, nécessairement, D21 ≤ D14 ≤ D20).

Un tel agencement de l'orifice d'accès 8, qui va en s'évasant par une succession d'étages (l'alésage 12, la gorge d'arrêt 20, puis l'embouchure 22, ces deux dernières se trouvant en retrait radial centripète par rapport audit alésage 12) permet de dégager l'accès du bouchon 10, à l'orifice d'accès 8, et à l'alésage 12, et plus particulièrement d'éviter le risque d'interférence (par contact), lors de l'insertion du bouchon 10, entre la garniture d'étanchéité 13, éventuellement recouverte de graisse, et la gorge d'arrêt 20, ce qui garantit la propreté de ladite gorge d'arrêt 20 lors de l'encliquetage et minimise le risque d'endommager (par coupure ou abrasion) la garniture d'étanchéité 13.

On notera plus particulièrement que le bord axialement interne de la gorge d'arrêt 20, dont le diamètre correspond au diamètre D12 de l'alésage, est plus serré (c'est-à-dire de diamètre moindre) que son bord axialement externe, qui correspond au col 27 de l'embouchure 22 et qui délimite le rebord d'arrêt (rebord de piétement) 20A, placé en surplomb radial du fond de la gorge d'arrêt 20, avec lequel la collerette 14 vient coopérer par encliquetage lorsqu'elle se redéploie radialement après s'être contractée pour franchir le col 27 de l'embouchure 22.

Le caractère tronconique de l'embouchure 22 pointant vers la chambre 7 contribuera par ailleurs également à faciliter l'approche et le centrage du bouchon 10 lors du montage.

Cet agencement tronconique facilitera notamment, à la manière d'un entonnoir, la contraction en flexion de la collerette 14, et plus particulièrement de la jupe tronconique, amenée à coopérer par glissement avec l'embouchure 22 pour en franchir le col 27 (dans le sens « passant » S1 de l'encliquetage).

De préférence, l'alésage 12 de l'orifice d'accès 8 est limité par un épaulement de fond 30, radialement rentrant (centripète), qui forme une butée axiale à l'encontre du moyeu 10, à l'opposé de la collerette 14, afin de stopper l'enfoncement du bouchon 10 dans ledit orifice d'accès 8.

En définitive, le bouchon 10 peut ainsi se trouver bloqué (et plus particulièrement pincé) axialement, en étant retenu de façon bidirectionnelle (à la fois dans le sens passant S1 et dans le sens bloquant S2 de l'encliquetage), et donc retenu de façon très stable, entre la gorge d'arrêt 20, et plus particulièrement le col 27 de l'embouchure 22, par sa collerette 14 d'une part, et l'épaulement de fond 30, par son nez 16 plaqué contre ledit épaulement 30 d'autre part.

Avantageusement, l'effet de pincement sera obtenu par une contrainte de compression axiale provenant de la déformation élastique résiduelle de la collerette 14. Ainsi, ladite collerette 14, en prenant appui sur le rebord d'arrêt 20A d'un côté du bouchon, tendra à comprimer axialement, à la manière d'un ressort, le nez 16 dudit bouchon contre l'épaulement de fond 30 situé du côté opposé.

Bien entendu, la hauteur (dimension axiale) nominale au repos du bouchon 10, avant déformation de la collerette 14, sera adaptée à cet effet en fonction de la distance qui sépare, au sein du carter 5, l'épaulement de fond 30 du col 27 de l'embouchure 22.

Avantageusement, l'épaulement de fond 30 pourra également fournir un appui axial (de compression) à la garniture d'étanchéité 13, tel que cela a été mentionné plus haut en référence notamment à la figure 8.

Bien entendu, on pourrait envisager, sans sortir du cadre de l'invention, d'utiliser tout autre type de butée axiale (goupille, anneau élastique, etc.) remplissant le même rôle que l'épaulement de fond 30 en barrant en tout ou partie l'alésage 12 par son travers.

De préférence, l'élément de carter 5 est réalisé, préférentiellement d'un seul tenant, dans un alliage métallique, tel qu'un alliage d'aluminium ou de magnésium.

Le choix d'un tel alliage métallique léger permettra de concilier robustesse et légèreté.

De préférence, l'élément de carter 5 comporte également des organes de fixation 31, du genre passages de vis et/ou inserts filetés, permettant d'accoler et de fixer ledit élément de carter 5 à d'autres éléments de carter, par exemple à un tube de guidage de crémaillère, de sorte à pouvoir reconstituer un carter complet qui formera une enceinte protégée, étanche et lubrifiée, permettant d'isoler efficacement le mécanisme 2 de son environnement.

L'invention se rapporte bien entendu en tant que tel à un bouchon 10 selon l'une ou l'autre des variantes possibles de l'invention.

Plus particulièrement, l'invention concerne un bouchon 10 clippable en matériau polymère destiné à l'obturation d'un carter 5, ledit bouchon comprenant une âme 11, 14 en matériau polymère qui regroupe d'un seul tenant d'une part un moyeu 11, pourvu par ailleurs d'une garniture d'étanchéité 13 en matériau élastomère rapportée sur l'âme, et d'autre part une collerette 14 qui s'étend en saillie radiale externe dudit moyeu 11 de sorte à former à la fois un clip élastique de fixation, destiné à coopérer par encliquetage avec le carter 5, et un déflecteur 21 dont le diamètre D21 excède le diamètre hors-tout du moyeu 11 et de sa garniture d'étanchéité 13 (c'est-à-dire, en pratique, le diamètre D12 de l'alésage 12 susmentionné).

Le moyeu 11 présente de préférence une paroi latérale lisse, non filetée, qui reçoit une garniture d'étanchéité 13 annulaire.

Par ailleurs, et quelle que soit sa forme telle que décrite plus haut, la garniture d'étanchéité 13 est quant à elle de préférence réalisée dans un matériau élastomère, distinct du matériau constitutif du moyeu 11, et plus globalement distinct du matériau constitutif de l'âme 11, 14, le matériau constitutif de la garniture d'étanchéité 13 étant de préférence plus souple que celui constitutif du moyeu 11 (et notamment de dureté Shore inférieure).

De préférence, tel que cela a déjà mentionné plus haut, la collerette 14 dudit bouchon 10 est inclinée par rapport à l'axe directeur (XX') dudit bouchon de sorte à former une jupe tronconique qui s'évase à partir du moyeu 11.

Par ailleurs, l'invention porte bien entendu sur un élément de carter 5 pourvu d'un orifice d'accès 8 adapté à réception d'un bouchon 10 conforme à l'invention, et présentant à cet effet l'une ou l'autre des caractéristiques susmentionnées, et plus particulièrement possédant le caractère étagé et progressivement évasé de l'orifice 8, depuis l'alésage 12 jusqu'à l'embouchure 22, en passant par la gorge d'accès 20.

L'invention porte également sur un système de direction, notamment de direction assistée, comprenant un carter 5 selon l'invention formant un carter de direction.

L'invention porte enfin sur un véhicule automobile, notamment un véhicule automobile à roues motrices et à roues directrices destiné par exemple au transport de personnes, qui est équipé d'un tel système de direction, et plus particulièrement d'un carter de direction comprenant (ou constituant) un dispositif de protection 1 selon l'invention.

## Revendications

1. Dispositif (1) de protection d'un mécanisme (2), tel qu'un mécanisme (2) de direction de véhicule, ledit dispositif (1) comprenant d'une part un élément de carter (5) formant une paroi (6) délimitant une chambre (7) qui est destinée à recevoir et abriter ledit mécanisme (2), ladite paroi (6) étant percée d'au moins un orifice d'accès (8) permettant d'accéder à la chambre (7) depuis l'extérieur (9) dudit élément de carter (5), et d'autre part un bouchon (10) qui obture ledit orifice d'accès (8), le bouchon (10) présentant une structure étagée axialement, qui comprend successivement, selon l'axe directeur (XX') dudit bouchon, un moyeu (11), qui est engagé dans un alésage (12) de l'orifice d'accès (8), ledit moyeu (11) étant orienté vers la chambre (7) et portant une garniture d'étanchéité (13) qui coopère avec ledit alésage (12) de l'orifice d'accès, puis une collerette (14), qui est orientée vers l'extérieur (9) de l'élément de carter (5), ledit dispositif étant **caractérisé en ce que** le diamètre hors-tout (D14) de la collerette est supérieur au diamètre (D12) de l'alésage (12), le bouchon (10) étant enfoncé dans l'orifice d'accès (8) de telle manière que la collerette (14) est placée en retrait de la surface apparente du carter (5), ladite collerette (14) formant d'une part un clip élastique engagé en appui dans une gorge d'arrêt (20) creusée dans l'élément de carter (5) en déport radial de l'alésage (12), de telle manière que ladite collerette (14) s'oppose par encliquetage à l'extraction du bouchon (10) hors de l'orifice d'accès (8), et ladite collerette (14) présentant d'autre part une portion pleine qui s'étend radialement à partir du moyeu pour former un déflecteur (21) dont le diamètre (D21) est supérieur à celui (D12) de l'alésage (12), de telle manière que le déflecteur (21) couvre le pourtour dudit alésage (12) en définissant une chicane radiale qui protège le moyeu (10) et la garniture d'étanchéité (13).

2. Dispositif selon la revendication 1 **caractérisé en ce que** la collerette (14) vient en appui dans la gorge d'arrêt (20) par son extrémité libre pour assurer le maintien du bouchon (10) par blocage axial anti-retour.

3. Dispositif selon la revendication 1 ou 2 **caractérisé en ce que** la collerette (14) est inclinée par rapport à l'axe directeur (XX') du bouchon (10) pour former une jupe tronconique qui s'évase à partir du moyeu (11) et dont le sommet est orienté vers la chambre (7).

4. Dispositif selon la revendication 1 ou 2 **caractérisé en ce que** la collerette (14) se présente sous la forme d'un disque qui s'étend de façon sensiblement normale à l'axe directeur (XX'), et **en ce qu'**une rainure d'affaiblissement (23) circulaire, concentrique au rebord de la collerette (14), est prévue pour améliorer la flexibilité de ladite collerette (14).

5. Dispositif selon l'une des revendications 1 à 3 **caractérisé en ce que** la collerette (14) est fendue, depuis son extrémité libre jusqu'à la plus petite limite radiale externe du déflecteur (21), de manière à être subdivisée en une pluralité de languettes d'encliquetage (24), tout en conservant une racine (26) annulaire par laquelle ladite collerette (14) est rattachée au moyeu (11) et dont le diamètre (D21) est supérieur au diamètre (D12) de l'alésage (12) de telle sorte que ladite racine (26) tient lieu de déflecteur (21).

6. Dispositif selon l'une des revendications précédentes **caractérisé en ce que** l'orifice d'accès (8) présente une embouchure (22) tronconique qui surplombe la gorge d'arrêt (20) et dont le sommet est orienté vers la chambre (7), la petite base (27) de ladite embouchure (22) présentant un diamètre (D27) supérieur au diamètre (D12) de l'alésage (12), et inférieur au diamètre hors-tout (D14) de la collerette (14) ainsi qu'au diamètre de fond (D20) de la gorge d'arrêt (20).

7. Dispositif selon l'une des revendications précédentes **caractérisé en ce que** l'alésage (12) de l'orifice d'accès est limité par un épaulement de fond (30), radialement rentrant, qui forme une butée axiale à l'encontre du moyeu (11), à l'opposé de la collerette (14), afin de stopper l'enfoncement du bouchon (10) dans ledit orifice d'accès (8).

8. Dispositif selon l'une des revendications précédentes **caractérisé en ce que** le moyeu (11) et la collerette (14) du bouchon (10) sont formés d'un seul tenant dans un matériau polymère, de préférence en polyamide ou en polyacétal, éventuellement renforcé de fibres.

9. Dispositif selon l'une des revendications précédentes **caractérisé en ce que** la garniture d'étanchéité (13) est formée par un revêtement en matériau élastomère, de préférence surmoulé, qui recouvre le moyeu (11), ou bien par un joint torique rapporté sur ledit moyeu (11), ledit joint torique étant logé soit dans une gorge annulaire (17) creusée dans la paroi latérale du moyeu (11), soit contre un épaulement (18) du moyeu qui s'ouvre à l'opposé de la collerette (14).

10. Dispositif selon l'une des revendications précédentes **caractérisé en ce que** l'élément de carter (5) est réalisé, de préférence d'un seul tenant, dans un alliage métallique, tel qu'un alliage d'aluminium ou de magnésium.

## Patentansprüche

1. Vorrichtung (1) zum Schutz eines Mechanismus (2), wie eines Fahrzeuglenkmechanismus (2), wobei die besagte Vorrichtung (1) einerseits ein Gehäuseelement (5) umfasst, das eine Wand (6) bildet, die eine Kammer (7) eingrenzt, die dazu bestimmt ist, den besagten Mechanismus (2) aufzunehmen und zu schützen, wobei zumindest ein Zugangsloch (8) in die besagte Wand (6) gebohrt ist, das es ermöglicht, von außerhalb (9) des besagten Gehäuseelements (5) zur Kammer (7) zu gelangen, und andererseits einen Stopfen (10), der das besagte Zugangsloch (8) verschließt, wobei der Stopfen (10) eine axial abgestufte Struktur aufweist, die nacheinander entlang der Lenkachse (XX') des besagten Stopfens eine Nabe (11) umfasst, die in eine Bohrung (12) des Zugangslochs (8) eingreift, wobei die besagte Nabe (11) zur Kammer (7) hin ausgerichtet ist, und eine Dichtungspackung (13) trägt, die mit der besagten Bohrung (12) des Zugangslochs zusammenwirkt, und danach einen Bund (14), der zur Außenseite (9) des Gehäuseelements (5) hin gerichtet ist, wobei die besagte Vorrichtung **dadurch gekennzeichnet ist, dass** der Gesamtdurchmesser (D14) des Bundes größer ist, als der Durchmesser (D12) der Bohrung (12), wobei der Stopfen (10) derart in das Zugangsloch (8) eingedrückt ist, dass der Bund (14) von der sichtbaren Oberfläche des Gehäuses (5) zurückgezogen platziert wird, wobei der besagte Bund (14) einerseits einen elastischen Clip bildet, der in einer Anschlagrille (20) anliegend eingreift, die in einem radialen Versatz der Bohrung (12) in das Gehäuseelement (5) eingearbeitet ist, sodass sich der besagte Bund (14) durch Einrasten der Entfernung des Stopfens (10) aus dem Zugangsloch (8) heraus widersetzt, und der besagte Bund (14) andererseits einen vollen Abschnitt aufweist, der sich radial aus der Nabe heraus erstreckt, um einen Abweiser (21) zu bilden, dessen Durchmesser (D21) größer ist, als jener (D12) der Bohrung (12), sodass der Abweiser (21) die Umrandung der besagten Bohrung (12) verdeckt und eine radiale Schikane definiert, welche die Nabe (10) und die Dichtungspackung (13) schützt.

2. Vorrichtung nach Anspruch 1, **dadurch gekennzeichnet, dass** der Bund (14) an seinem freien Ende in der Anschlagrille (20) anliegt, um für den Halt des Stopfens (10) durch eine axiale Rücklaufsperre zu sorgen.

3. Vorrichtung nach Anspruch 1 oder 2, **dadurch gekennzeichnet, dass** der Bund (14) im Verhältnis zur Lenkachse (XX') des Stopfens (10) geneigt ist, um eine kegelstumpfförmige Schürze zu bilden, die sich aus der Nabe (11) heraus erweitert, und deren Scheitelpunkt zur Kammer (7) hin gerichtet ist.

4. Vorrichtung nach Anspruch 1 oder 2, **dadurch gekennzeichnet, dass** sich der Bund (14) in Form einer Scheibe darstellt, die sich in etwa normal zur Lenkachse (XX') erstreckt, und dadurch, dass eine kreisförmige Schwächungsrille (23), konzentrisch zum Rand des Bundes (14), vorgesehen ist, um die Flexibilität des besagten Bundes (14) zu verbessern.

5. Vorrichtung nach einem der Ansprüche 1 bis 3, **dadurch gekennzeichnet, dass** der Bund (14) von seinem freien Ende bis zur kleinsten äußeren radialen Grenze des Abweisers (21) geschlitzt ist, um in eine Vielzahl von Rastlaschen (24) unterteilt zu werden, und dabei eine ringförmige Wurzel (26) zu bewahren, an der der besagte Bund (14) an der Nabe (11) angebunden ist, und deren Durchmesser (D21) größer ist, als der Durchmesser (D12) der Bohrung (12), sodass die besagte Wurzel (26) als Abweiser (21) dient.

6. Vorrichtung nach einem der vorherigen Ansprüche, **dadurch gekennzeichnet, dass** das Zugangsloch (8) eine kegelstumpfförmige Einmündung (22) aufweist, welche die Anschlagrille (20) überragt und deren Scheitelpunkt zur Kammer (7) hin gerichtet ist, wobei die kleine Basis (27) der besagten Einmündung (22) einen Durchmesser (D27) aufweist, der größer ist, als der Durchmesser (D12) der Bohrung (12), und kleiner, als der Gesamtdurchmesser (D14) des Bundes (14), und als der Bodendurchmesser (D20) der Anschlagrille (20).

7. Vorrichtung nach einem der vorherigen Ansprüche, **dadurch gekennzeichnet, dass** die Bohrung (12) des Zugangsloches durch einen radial einspringenden Bodenansatz (30) eingegrenzt wird, der einen axialen Anschlag zur Nabe (11) gegenüber dem Bund (14) bildet, um das Eindrücken des Stopfens (10) in das besagte Zugangsloch (8) zu stoppen.

8. Vorrichtung nach einem der vorherigen Ansprüche, **dadurch gekennzeichnet, dass** die Nabe (11) und der Bund (14) des Stopfens (10) in einem einzigen Stück aus einem Polymerwerkstoff, vorzugsweise aus Polyamid oder aus Polyacetal gebildet werden, der eventuell faserverstärkt ist.

9. Vorrichtung nach einem der vorherigen Ansprüche, **dadurch gekennzeichnet, dass** die Dichtungspackung (13) durch eine vorzugsweise überformte Beschichtung aus einem Elastomerwerkstoff gebildet wird, welche die Nabe (11) überdeckt, oder aber durch einen O-Ring, der auf die besagte Nabe (11) beigebracht wird, wobei der besagte O-Ring entweder in einer ringförmigen Nut (17) aufgenommen wird, die in die Seitenwand der Nabe (11) eingelassen ist, oder an einem Ansatz (18) der Nabe, der sich gegenüber dem Bund (14) öffnet.

10. Vorrichtung nach einem der vorherigen Ansprüche, **dadurch gekennzeichnet, dass** das Gehäuse (5) vorzugsweise in einem einzigen Stück aus einer Metalllegierung, wie einer Aluminiumlegierung oder Magnesiumlegierung gefertigt ist.

## Claims

1. A device (1) for protecting a mechanism (2), such as a vehicle steering mechanism (2), said device (1) comprising, on the one hand, a casing member (5) forming a wall (6) delimiting a chamber (7) which is intended for receiving and protecting said mechanism (2), said wall (6) being pierced with at least one access orifice (8) allowing access to the chamber (7) from the outside (9) of said casing member (5) and, on the other hand, a plug (10) which closes said access orifice (8), the plug (10) having an axially stepped structure, which comprises successively, along the main axis (XX') of said plug, a hub (11), which is engaged in a bore (12) of the access orifice (8), said hub (11) being oriented toward the chamber (7) and carrying a sealing gasket (13) which cooperates with said bore (12) of the access orifice, then a collar (14) which is oriented toward the outside (9) of the casing member (5), said device being **characterized in that** the overall diameter (D14) of the collar is greater than the diameter (D12) of the bore (12), the plug (10) being sunk in the access orifice (8) so that the collar (14) is set back from the apparent surface of the casing (5), said collar (14) forming, on the one hand, an elastic clip engaged to bear in a stop groove (20) dug in the casing member (5) radially offset from the bore (12), such that said collar (14) opposes by snap-fitting to the extraction of the plug (10) out of the access orifice (8), and said collar (14) having, on the other hand, a solid portion which radially extends from the hub to form a deflector (21) whose diameter (D21) is greater than that (D12) of the bore (12), such that the deflector (21) covers the circumference of said bore (12) by defining a radial baffle which protects the hub (11) and the sealing gasket (13).

2. The device according to claim 1 **characterized in that** the collar (14) bears in the stop groove (20) by its free end in order to ensure the holding of the plug (10) by non-return axial blocking.

3. The device according to claim 1 or 2 **characterized in that** the collar (14) is inclined relative to the main axis (XX') of the plug (10) in order to form a truncated-cone skirt which flares from the hub (11) and whose top is oriented towards the chamber (7).

4. The device according to claim 1 or 2 **characterized in that** the collar (14) is in the shape of a disc which extends substantially normal to the main axis (XX'), and **in that** a circular weakening groove (23), concentric to the rim of the collar (14), is provided for improving the flexibility of said collar (14).

5. The device according to any of claims 1 to 3, **characterized in that** the collar (14) is splitted, from its free end to the smallest outer radial limit of the deflector (21) so as to be subdivided into a plurality of snap-fitting tabs (24), while keeping an annular root (26) by which said collar (14) is attached to the hub (11) and whose diameter (D21) is greater than the diameter (D12) of the bore (12) so that said root (26) operates as a deflector (21).

6. The device according to any of the preceding claims **characterized in that** the access orifice (8) has a truncated-cone mouthpiece (22) which overhangs the stop groove (20) and whose top is oriented towards the chamber (7), the small base (27) of said mouthpiece (22) having a diameter (D27) greater than the diameter (D12) of the bore (12) and lower than the overall diameter (D14) of the collar (14) and lower than the bottom diameter (D20) of the stop groove (20).

7. The device according to any of the preceding claims, **characterized in that** the bore (12) of the access orifice is limited by a radially retracting bottom shoulder (30) which forms an axial abutment against the hub (11), opposite to the collar (14) in order to stop the sinking of the plug (10) in said access orifice (8).

8. The device according to any of the preceding claims **characterized in that** the hub (11) and the collar (14) of the plug (10) are formed in one piece in a preferably polyamide or polyacetal, possibly fiber-reinforced, polymeric material.

9. The device according to any of the preceding claims **characterized in that** the sealing gasket (13) is formed by a coating made of, preferably overmolded, elastomeric material, which covers the hub (11), or by an O-ring added on said hub (11), said O-ring being housed either in an annular groove (17) dug in the lateral wall of the hub (11), or against a shoulder (18) of the hub which opens opposite to the collar (14).

10. The device according to any of the preceding claims **characterized in that** the casing member (5) is made, preferably in one piece, of a metal alloy, such as an aluminum or magnesium alloy.
